# FASCICULE DE BREVET EUROPEEN

(11) **EP 2 555 016 B1**
(45) Date de publication et mention de la délivrance du brevet: **01.07.2015**
(21) Numéro de dépôt: 12178258.5
(22) Date de dépôt: 27.07.2012
(51) Int. Cl.: G01S 19/08, G01S 19/02

(54) **Charge utile de satellite pour systèmes d'augmentation**
Nutzlast eines Satelliten für Erweiterungssysteme
Satellite payload for augmentation systems

(30) Priorité: 05.08.2011 FR 1102464
(43) Date de publication de la demande: 06.02.2013
(73) Titulaire: Thales, 92200 Neuilly Sur Seine (FR)
(72) Inventeur: Peyrotte, Christian, 31100 Toulouse (FR)
(74) Mandataire: Lucas, Laurent Jacques

(56) Documents cités:
- FR-A1- 2 921 528
- US-A1- 2005 041 955
- US-A1- 2009 179 743
- US-B2- 7 460 828
- Javier Ventura-Traveset ET AL: "EGNOS GEO Replenishment: Planning for the Future", , 1 janvier 2000 (2000-01-01), pages 1-11, XP055020792, Extrait de l'Internet: URL:http://www.egnos-pro.esa.int/Publicati ons/GNSS%202000/GNSS2000_GEO.pdf [extrait le 2012-03-02]
- ILCEV D ET AL: "European Geostationary Navigation Overlay Service (EGNOS)", IST-AFRICA CONFERENCE PROCEEDINGS, 2011, IEEE, 11 mai 2011 (2011-05-11), pages 1-14, XP032077102, ISBN: 978-1-4577-1077-3
- MOHAMED SAHMOUDI ET AL: "U-SBAS: A universal multi-SBAS standard to ensure compatibility, interoperability and interchangeability", SATELLITE NAVIGATION TECHNOLOGIES AND EUROPEAN WORKSHOP ON GNSS SIGNALS AND SIGNAL PROCESSING (NAVITEC), 2010 5TH ESA WORKSHOP ON, IEEE, 8 décembre 2010 (2010-12-08), pages 1-18, XP031898945, DOI: 10.1109/NAVITEC.2010.5708076 ISBN: 978-1-4244-8740-0

## Description

La présente invention concerne le domaine des systèmes d'augmentation, des performances et de la disponibilité, de systèmes de navigation par satellite.

L'invention concerne plus particulièrement la liaison montante entre plusieurs stations terrestres de navigation et un satellite dédié à la transmission de données d'augmentation. L'invention a notamment pour objet une charge utile de navigation numérique et semi-transparente pour un tel satellite.

Par la suite, les acronymes anglo-saxons suivants, bien connus du domaine, seront utilisés. Les systèmes de navigation et de positionnement par satellite sont généralement désignés par le terme systèmes GNSS (Global Navigation Satellite System). Les systèmes d'augmentation de performances sont appelés systèmes SBAS (Satellite Based Augmentation Systems). Les stations au sol adaptées à transmettre au satellite des données d'augmentation sont appelées stations NLES (Navigation Land Earth Stations). Les stations au sol adaptées à recevoir des signaux satellites comportant des données d'augmentation et à réaliser des mesures sur ces signaux sont communément appelées stations RIMS (Ranging & Integrity Monitoring Station).

Les systèmes d'augmentation SBAS connus permettent de délivrer en temps réel des corrections aux récepteurs GNSS dans le but notamment d'accroitre la précision de la géolocalisation effectuée. Ils permettent également la diffusion d'informations servant à améliorer l'intégrité du service fourni par le système. De façon générale, les corrections et autres informations générées et diffusées par de tels systèmes sont appelées données d'augmentation et sont transmises sous forme de messages d'augmentation directement dans le signal de navigation.

Pour produire et diffuser de telles données, les systèmes SBAS sont généralement composés de stations sols RIMS qui mesurent en permanence les signaux GNSS transmis par les satellites de navigation, de centres de traitements qui reçoivent ces mesures et élaborent les messages d'augmentation et de stations sols NLES qui transmettent ces messages avec le signal de navigation GNSS vers un satellite d'augmentation SBAS qui fait office de relai en retransmettant le signal reçu vers les récepteurs GNSS. Dans un tel système, la charge utile d'un satellite SBAS est dite transparente, ce qui signifie qu'aucun traitement entrainant une modification du contenu du signal reçu n'est effectué à bord du satellite.

De tels systèmes présentent des limitations concernant la disponibilité et la continuité de fonctionnement qu'ils offrent qui n'est garantie qu'au prix d'une complexité additionnelle du système, notamment par une redondance de certains équipements.

La charge utile d'un satellite SBAS étant de type transparent, elle ne permet pas un accès simultané à ses ressources. La mise en oeuvre d'une redondance chaude entre une station sol NLES nominale et une station NLES de secours redondante n'est ainsi pas possible car le satellite SBAS n'est capable que de recevoir et retransmettre un signal à puissance nominale à la fois émis par une seule station NLES dite station master ou nominale.

L'expression redondance chaude est utilisée en référence à un système pour lequel au moins deux stations sol NLES peuvent émettre simultanément un signal sur la voie montante du satellite SBAS. Par opposition, on parle de redondance froide lorsque deux stations au moins sont disponibles pour l'émission du signal de navigation vers le satellite SBAS mais elles n'émettent pas simultanément. Le principe de redondance froide s'applique aux systèmes SBAS connus. Lorsqu'une panne de la station NLES nominale est détectée, la station NLES de secours, qui est non active par défaut, est mise en route afin d'assurer la commutation de stations et la poursuite du service. Le temps nécessaire à la mise en route de la station de secours engendre une perte de continuité et une interruption de service conséquente, qui peut dépasser la minute. Ce temps d'interruption est également du aux traitements suivants, nécessaires pour rétablir la liaison : détection du défaut, basculement vers la station NLES de redondance, stabilisation des boucles d'asservissements station, acquisition du niveau d'intégrité requis.

Un autre problème lié à l'aspect transparent du satellite SBAS concerne l'intégrité du message de navigation reçu par ce satellite. Les solutions connues mettent en oeuvre un contrôle d'intégrité des signaux au niveau des stations sols NLES. Ce contrôle est réalisé en comparant le signal de navigation émis sur la voie montante avec le signal transmis par le satellite SBAS sur la voie descendante, qui est capté par les stations NLES.

La détection d'un éventuel brouillage ou leurre des signaux de navigation est réalisée au sol et entraine soit la diffusion d'un message spécifique d'alerte qui n'est pas instantané, soit une cessation d'émission de la station NLES. Aucune interdiction de diffusion d'un signal leurré n'est possible au niveau du satellite SBAS lui-même, sauf à éteindre la charge utile à partir d'une liaison de télécommande depuis le sol. Ce type de fonctionnement engendre une perte de disponibilité pour les récepteurs GNSS qui doivent attendre l'émission par le satellite d'un nouveau signal valide.

Un troisième problème réside dans l'utilisation, pour la transmission des signaux de navigation émis par les stations NLES, de bandes de fréquences multiples. Par exemple, les systèmes GPS peuvent utiliser trois sous-bandes de fréquences dans la bande L, à savoir les bandes L1, L2 et L5 pour des utilisations diverses. De même le système européen Galileo prévoit l'utilisation de quatre sous-bandes de fréquence. En outre, la maintenance opérationnelle du système peut exiger la transmission de canaux de test.

La transmission des signaux sur la liaison montante entre une station NLES et le satellite se fait classiquement selon un plan de fréquence de type FDMA et sur une polarisation unique. C'est-à-dire que chaque signal est émis dans la bande de fréquence (L1,L2,L5,..) qui lui correspond. La multiplicité des canaux peut donc engendrer une occupation spectrale très importante, et conduire à un accroissement de la complexité des stations sol et de la charge utile.

A bord du satellite, la charge utile prévoit plusieurs voies de traitement adaptées à chaque bande de fréquences. La transmission des signaux sur au moins deux bandes de fréquences distinctes entraine une dispersion différentielle en gain et phase entre les canaux de navigation relatifs à ces différentes fréquences. En effet, le canal de propagation entraine des perturbations (bruit, impact de l'ionosphère) différentes en fonction de la fréquence d'émission. Les signaux doivent donc être corrigés en amplitude, en retard et en phase pour compenser ces erreurs différentielles. En outre des difficultés d'appairage et de calibration des voies entre elles ont pour conséquence une mauvaise gestion simultanée de signaux émis sur deux ou plusieurs bandes de fréquences distinctes, ce qui provoque une dégradation de performances pour l'utilisateur du système.

On connait par ailleurs le document US7460828B2 qui décrit une charge utile pour satellite dans un système d'augmentation.

La présente invention vise notamment à pallier les limitations précitées des systèmes SBAS connus en proposant une charge utile pour satellite SBAS numérique et semi-transparente, c'est-à-dire qui permette toujours de remplir la mission du satellite de relai transparent des messages de navigation et d'augmentation tout en introduisant certains traitements spécifiques au niveau du satellite permettant d'améliorer la sécurité, la continuité de service, la gestion du contrôle d'intégrité ainsi que les performances radio.

A cet effet, l'invention a pour objet une charge utile pour satellite d'augmentation comprenant une voie d'entrée adaptée à la réception de signaux de navigation émis par au moins une station terrestre de navigation dans une première bande de fréquences et une pluralité de voies de sortie chacune adaptée à la diffusion de signaux de navigation dans une bande de fréquences différente de ladite première bande et des autres bandes de diffusion, **caractérisée en ce qu'**elle comprend en outre un processeur de navigation adapté à mettre en oeuvre les opérations suivantes pour chacun desdits signaux reçus :
- à partir d'un premier ensemble de codes d'étalements associés chacun à une station terrestre de navigation et pour chacun desdits codes, désétaler le signal en phase afin d'extraire un signal pilote,
- authentifier ledit signal pilote et en déduire la station émettrice dudit signal,
- si l'authentification est négative, bloquer ledit signal de navigation,
- mesurer le rapport signal à bruit et interférences affectant ledit signal pilote,
- retenir, parmi les signaux de navigation reçus celui qui présente le rapport signal à bruit et interférences le plus élevé et pour lequel l'authentification est positive, ledit signal retenu étant appelé signal nominal, la station émettrice du signal nominal étant appelée station nominale, les autres stations émettrices étant appelées stations redondantes,
- à partir d'un second ensemble de codes d'étalements associés chacun à un type de signal de navigation destiné à être transmis sur une des bandes de fréquences de diffusion et pour chacun desdits codes, désétaler le signal de navigation nominal en quadrature,
- transmettre ledit signal de navigation nominal dans la bande de fréquence de diffusion associée au code d'étalement utilisé.

Selon un aspect particulier de l'invention, ledit signal pilote est au préalable démodulé selon une modulation de type « Cyclic Code Shift Keying », l'authentification du signal pilote étant réalisé en identifiant le code associé à ladite modulation.

L'invention a également pour objet une charge utile pour satellite d'augmentation comprenant une voie d'entrée adaptée à la réception de signaux de navigation émis par au moins une station terrestre de navigation dans une première bande de fréquences et une pluralité de voies de sortie chacune adaptée à la diffusion de signaux de navigation dans une bande de fréquences différente de ladite première bande et des autres bandes de diffusion, **caractérisée en ce qu'**elle comprend en outre un processeur de navigation adapté à mettre en oeuvre les opérations suivantes pour chacun desdits signaux reçus :
- démoduler ledit signal reçu selon une modulation de type « Cyclic Code Shift Keying »,
- authentifier ledit signal reçu en identifiant le code associé à ladite modulation et en déduire la station émettrice dudit signal,
- si l'authentification est négative, bloquer ledit signal de navigation,
- mesurer le rapport signal à bruit et interférences affectant ledit signal reçu,
- retenir, parmi les signaux de navigation reçus celui qui présente le rapport signal à bruit et interférences le plus élevé et pour lequel l'authentification est positive, ledit signal retenu étant appelé signal nominal, la station émettrice du signal nominal étant appelée station nominale, les autres stations émettrices étant appelées stations redondantes,
- à partir d'un ensemble de codes d'étalements associés chacun à un type de signal de navigation destiné à être transmis sur une des bandes de fréquences de diffusion et pour chacun desdits codes, désétaler le signal de navigation nominal en quadrature,
- transmettre ledit signal de navigation nominal dans la bande de fréquence de diffusion associée au code d'étalement utilisé.

Selon un aspect particulier de l'invention, lorsque le rapport signal à bruit et interférences mesuré sur ledit signal nominal décroît en dessous d'un seuil prédéterminé, le nouveau signal nominal retenu est celui qui présente le rapport signal à bruit et interférences le plus élevé.

Dans une variante de réalisation, la charge utile selon l'invention comprend en outre une voie de retour adaptée à la diffusion, dans ladite première bande de fréquences, d'au moins un signal de service vers au moins une station terrestre de navigation, ledit signal de service comprenant au moins la mesure du rapport signal à bruit et interférences d'au moins le signal nominal, ledit signal de service étant adapté à réaliser un asservissement de la puissance d'émission desdites stations redondantes sur la puissance d'émission de la station nominale.

Selon un aspect particulier de l'invention, ledit signal de service comprend en outre les mesures du rapport signal à bruit et interférences des signaux de navigation reçus par le satellite et émis par toutes les stations émettrices.

Selon un aspect particulier de l'invention, ledit signal de service comprend en outre une mesure des décalages temporels entre la réception, par le satellite, du signal nominal d'une part et des signaux émis par les stations terrestres de navigation redondantes, ledit signal de service étant adapté à réaliser une synchronisation temporelle desdites stations entre elles.

Selon un aspect particulier de l'invention, ladite voie de retour est en outre adaptée à la diffusion, dans ladite première bande de fréquences, du signal de navigation nominal.

Selon un aspect particulier de l'invention, ladite première bande de fréquences est la bande C ou Ku et lesdites bandes de fréquences de diffusion sont au moins les bandes L1 et L5.

Selon un aspect particulier de l'invention, lesdits codes d'étalement sont des codes de Walsh.

L'invention a également pour objet un satellite d'augmentation comprenant une charge utile selon l'invention, adaptée à recevoir un signal de navigation sur une liaison montante dans une première bande de fréquences et à rediffuser ledit signal sur une liaison descendante dans une pluralité de bandes de fréquences de diffusion.

L'invention a également pour objet une station terrestre de navigation adaptée à recevoir un message d'augmentation et à générer un signal de navigation contenant ledit message, ledit signal de navigation étant étalé spectralement à l'aide d'un premier code d'étalement associé à sa bande de fréquence de diffusion et additionné en quadrature d'un signal pilote étalé spectralement à l'aide d'un second code d'étalement associé à ladite station terrestre de navigation, ledit signal de navigation étant destiné à être transmis sur la liaison montante d'un satellite d'augmentation selon l'invention, dans une première bande de fréquences différente de la bande de fréquence de diffusion.

Selon un aspect particulier de la station terrestre de navigation selon l'invention, une modulation de type « Cyclic Code Shift Keying » est appliquée au préalable audit signal de navigation ou audit signal pilote.

Selon un aspect particulier de la station terrestre de navigation selon l'invention, la polarisation du signal de navigation transmis est différente selon la bande de fréquence de diffusion.

L'invention a également pour objet un système d'augmentation comprenant :
- au moins une station d'observation adaptée à recevoir un signal de radionavigation transmis par au moins un satellite de radionavigation et à réaliser des mesures sur ledit signal,
- au moins un centre de traitement adapté à recevoir lesdites mesures transmises par au moins une station de mesure et à élaborer, à partir desdites mesures, au moins un message d'augmentation,
- une pluralité de stations terrestres de navigation selon l'invention, lesdits premiers codes d'étalement associés aux dites stations terrestres de navigation étant orthogonaux entre eux,
- au moins un satellite d'augmentation selon l'invention.

Dans un mode de réalisation particulier, le système d'augmentation selon l'invention est adapté à mettre en oeuvre une commutation de stations terrestres de navigation de type redondance chaude.

Dans un mode de réalisation particulier, la polarisation du signal de navigation transmis est différente entre deux stations terrestres de navigation redondantes.

Dans un mode de réalisation particulier, sur réception d'un signal de service émis par ledit satellite d'augmentation et comprenant au moins la mesure du rapport signal à bruit et interférences d'au moins ledit signal nominal, lesdites stations terrestres de navigation réalisent un asservissement de leur puissance d'émission sur la puissance d'émission de la station nominale.

Dans un mode de réalisation particulier, sur réception dudit signal de service, lesdites stations terrestres de navigation réalisent une synchronisation temporelle de leurs émissions respectives.

D'autres caractéristiques et avantages de l'invention apparaîtront à l'aide de la description qui suit faite en regard de dessins annexés qui représentent :
- la figure 1, un synoptique de l'architecture d'un système SBAS selon l'art antérieur,
- la figure 2, un synoptique fonctionnel de la charge utile d'un satellite SBAS selon l'art antérieur,
- la figure 3, un schéma illustrant la génération du signal de la liaison montante entre une station NLES et un satellite SBAS, selon l'art antérieur,
- la figure 4a, un schéma illustrant la génération de signaux de navigation par une station NLES selon l'invention,
- la figure 4b, une variante de réalisation de la figure 4a,
- la figure 5a, un synoptique fonctionnel de la charge utile d'un satellite SBAS selon l'invention, dans un premier mode de réalisation,
- la figure 5b, un synoptique fonctionnel de la charge utile d'un satellite SBAS selon l'invention, dans un second mode de réalisation,
- la figure 6, un synoptique de l'architecture d'un système SBAS selon l'invention, dans le second mode de réalisation de la charge utile,
- la figure 7, un synoptique fonctionnel du processeur de navigation selon l'invention.

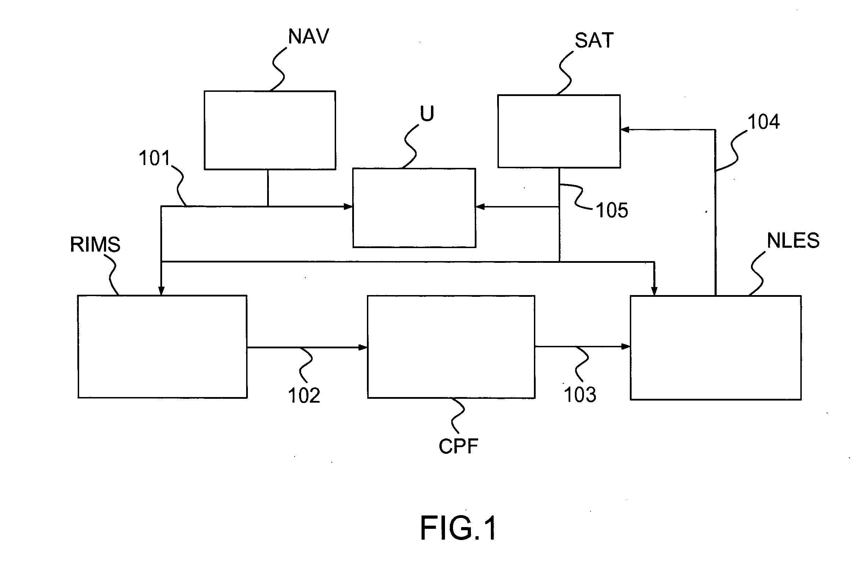

La figure 1 schématise, sur un synoptique, l'architecture globale d'un système SBAS selon l'art antérieur. Un tel système est adapté à produire des données d'augmentation à partir de mesures réalisées sur les signaux de navigation 101 émis par une pluralité de satellites de radionavigation NAV. Les mesures et données provenant des satellites de radionavigation NAV sont collectées par une pluralité de stations d'observations RIMS puis transmises 102, à un rythme donné, vers une pluralité de centres de traitements CPF. Ces derniers réalisent, à partir des mesures reçues, une estimation des corrections différentielles à appliquer au signal de radionavigation puis élaborent des messages d'augmentation, qui incluent ces corrections et sont ensuite transmis 103 à une station terrestre de navigation NLES. La station NLES reçoit les messages d'augmentation et les transmet 104 à un satellite d'augmentation SAT pour diffusion 105 ensuite aux utilisateurs U et aux stations sols RIMS, NLES. Les messages d'augmentation sont, à cet effet, intégrés, de façon similaire aux messages de navigation, dans un signal de navigation compatible du système GNSS. Un signal de navigation, généré par une station NLES puis diffusé par un satellite SAT, contient donc à la fois des messages de navigation et des messages d'augmentation qui peuvent être exploités par les récepteurs GNSS pour améliorer leurs performances de localisation. Le satellite d'augmentation SAT peut être un satellite géostationnaire ou un satellite à orbite haute HEO ou encore un satellite à orbite géostationnaire inclinée de type IGSO (Inclined Geosynchronous Satellite Orbit). La station NLES effectue un contrôle d'intégrité des messages reçus, transmis par les centres de traitements CPF, avec les messages diffusés par le satellite d'augmentation SAT sur la liaison descendante. Le signal retransmis par le satellite d'augmentation SAT est également reçu par les stations RIMS. Le centre de traitement CPF peut adresser une seconde station NLES redondante, en cas de panne de la station NLES principale mais cette redondance est de type froide, c'est-à-dire que la station NLES redondante est éteinte lorsque la station principale émet. La voie montante entre une station NLES et un satellite SAT d'augmentation fonctionne en bande Ku ou en bande C. La voie descendante entre un satellite SAT d'augmentation et une station RIMS ou un utilisateur U fonctionne en bande L pour la transmission du signal de navigation.

En outre, certains systèmes d'augmentation connus tel le système européen EGNOS, implémentent une voie de retour en bande Ku ou en bande C entre le satellite d'augmentation SAT et les stations sol NLES permettant une estimation bi-fréquence (Ku ou C et L) des paramètres physique de la liaison satellite. Cette voie de retour sert uniquement à réaliser un asservissement du temps d'émission du satellite par le biais d'une boucle longue. Afin de synchroniser précisément le temps d'émission du signal de navigation par le satellite d'augmentation SAT, les stations sol NLES avancent ou retardent l'émission de leur signal sur la voie montante afin de synchroniser le satellite avec une horloge fixe.

Lorsqu'aucune voie de retour n'est disponible, l'asservissement temporel peut aussi être réalisé par le biais du signal de navigation transmis vers les utilisateurs en bande L mais avec un code PRN spécifique aux procédures de tests et qui sera donc ignoré des utilisateurs.

Le schéma de la figure 1 ne représente qu'une unité pour chaque entité que comporte le système, mais celui-ci comporte en réalité plusieurs satellites d'augmentation SAT, plusieurs stations d'observations RIMS, plusieurs centres de traitement CPF et plusieurs stations d'émission NLES. En règle générale, deux stations d'émission NLES (nominale et redondante) sont utilisées pour un satellite d'augmentation.

Lorsqu'une station NLES est défectueuse, une commutation est réalisée vers la station NLES redondante, ce qui engendre une interruption du signal transmis sur la voie montante, de plusieurs secondes. Le rétablissement de la transmission d'un signal exploitable entraine un retard additionnel de plusieurs dizaines de secondes et le rétablissement complet du système est de l'ordre de la minute. Cette perte de continuité de service impacte particulièrement les applications à haute disponibilité exigée comme les applications aéronautiques. Elle entraine, pour les utilisateurs en vision d'un seul satellite d'augmentation une perte totale de service et pour les autres la nécessité de commuter vers un autre satellite. En outre, même à la reprise de service, la boucle de contrôle d'intégrité qui permet de garantir l'intégrité des messages transmis, n'est pas immédiatement opérationnelle tant que les stations sol n'ont pas ré-accroché le nouveau signal transmis par le satellite. La surveillance de l'intégrité du système n'est alors pas effective sur la liaison descendante et un leurrage de cette liaison descendante peut impacter une large zone régionale sans que le système puisse le détecter.

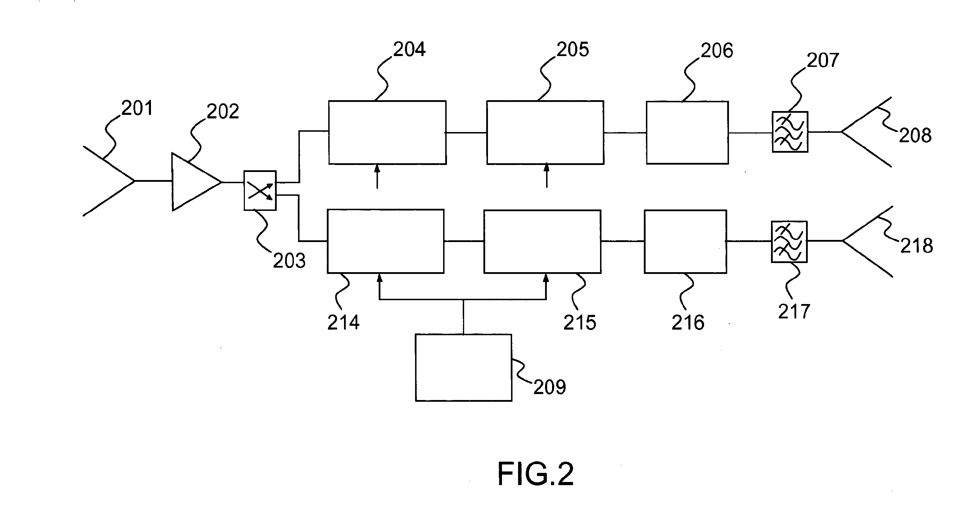

La figure 2 schématise sur un synoptique, les fonctions principales de la charge utile d'un satellite d'augmentation SBAS selon l'art antérieur. Les signaux émis par la station NLES sont reçus sur une entrée 201, adaptée à la réception de signaux en bande C ou en bande Ku, amplifiés par un amplificateur faible bruit 202, puis sont orientés, via un répartiteur 203, vers une voie de conversion de fréquence dans une des sous-bandes de la bande L utilisées par le système GNSS. Sur le schéma de la figure 2, deux voies de conversion sont représentées, permettant respectivement de convertir le signal en bande L1 ou en bande L5 pour retransmission vers les utilisateurs du système GNSS.

Une voie de conversion comporte un premier dispositif de transposition de fréquence 204,214 vers une fréquence intermédiaire, un second dispositif 205,215 de transposition de fréquence vers une fréquence en bande L1 ou L5, un oscillateur local de référence 209, un amplificateur 206,216, un filtre passe-bande 207,217 et une sortie 208,218 adaptée à la transmission de signaux en bande L1 ou L5.

Une telle charge utile est dite transparente car elle n'effectue aucun traitement spécifique sur le signal reçu autre que ceux nécessaires à la transposition en fréquence vers la bande de l'utilisateur. Ainsi, les signaux reçus par le satellite sont toujours retransmis vers le sol, sans contrôle, à ce niveau, de leur intégrité. En outre, une telle charge utile est constituée uniquement de circuits analogiques et l'adaptation à deux bandes de fréquences utilisateur nécessite de dupliquer la voie de conversion en fréquence, ce qui présente des inconvénients. Les deux voies doivent être appariées en amplitude, phase et retards différentiels.

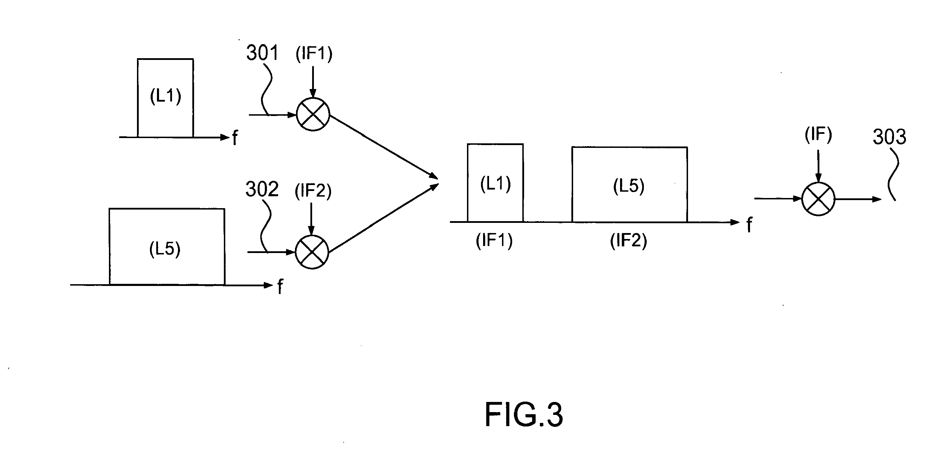

La figure 3 schématise la génération du signal transmis sur la voie montante entre une station NLES de l'art antérieur et un satellite SAT. Le signal à transmettre 301,302 est d'abord converti en fréquence L1 ou L5 selon la bande de fréquence de l'utilisateur final. Deux oscillateurs locaux IF1,IF2 sont utilisés à cette fin. Le signal résultant respecte un plan de fréquence de type FDMA, il est ensuite converti en bande C ou Ku par le biais d'un troisième oscillateur local IF. La largeur de bande fréquentielle du signal de navigation est donc proportionnelle au nombre de signaux d'augmentation à émettre.

L'invention vise notamment à pallier aux inconvénients des systèmes connus décrits à l'appui des figures 1,2 et 3.

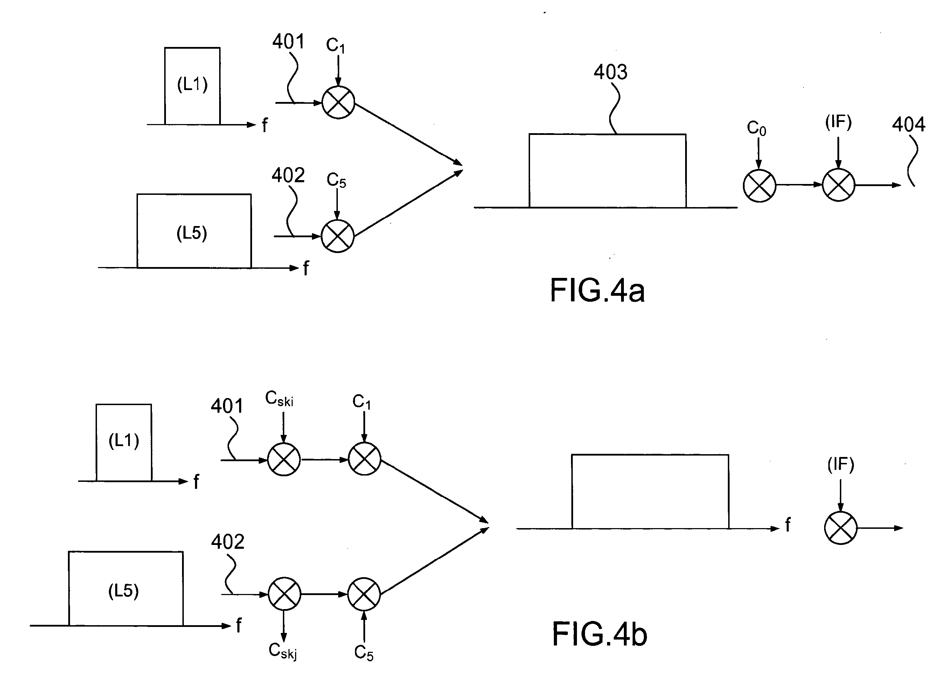

La figure 4a représente, sur un schéma, la modification, selon l'invention, du signal émis par une station NLES en direction d'un satellite d'augmentation SAT. Pour une simplification de description il n'est présenté que le cas de deux signaux de navigation, contenant des messages d'augmentation, à transmettre, sur deux bandes de fréquences L1,L5 distinctes.

Chaque signal de navigation à transmettre 301,302 est étalé par un code d'étalement C1,C5 spécifique, par exemple un code de Walsh, de sorte que chaque signal 401,402 occupe la même largeur de bande spectrale. Ce code a pour fonction l'identification, de manière non-ambiguë, du canal de transmission, associé à la bande de fréquence L1 ou L5. Les signaux 401,402 ainsi étalés sont ensuite transmis sur la même fréquence centrale, conformément à une méthode d'accès CDMA. En particulier, les codes d'étalement utilisés sont orthogonaux entre eux de façon à permettre une transmission simultanée de signaux sur la voie montante émanant de plusieurs stations NLES. Au signal de navigation 403 ainsi obtenu est ajouté un signal pilote, déphasé de 90°, et également étalé via un code d'étalement C0 spécifique qui sert à identifier la station NLES émettrice et à authentifier le signal de navigation. La méthode d'authentification utilisée peut être toute méthode connue permettant d'assurer une identification du signal reçu. En particulier on peut citer les méthodes d'authentification décrites dans les demandes de brevet suivantes : FR2921528 portant sur un procédé fournissant les moyens de reconnaître l'origine et/ou le contenu d'un signal RF ou US2009/0179743 dont le titre est « Pseudo-random authentification code altering scheme for a transponder and a base station » ou encore US 2005/ 0041955 dont le titre est « Authentification of data in a digital transmission system ». Des techniques dites de « watermarking », adaptées aux liaisons satellites peuvent également être utilisées.
Le signal résultant est enfin transposé en bande C ou Ku par le biais d'un oscillateur local IF pour être transmis sur la voie montante vers le satellite SAT d'augmentation.

En modifiant la génération du signal de navigation comme indiqué à la figure 4a, l'invention permet notamment de supprimer les erreurs différentielles induites par les canaux de propagation associés aux différentes bandes de fréquences L1,L5 montantes. L'introduction du signal pilote permet à la fois de réaliser une authentification, à bord du satellite, du signal émis et d'augmenter les performances d'estimation du rapport signal à bruit. En outre, les problèmes de synchronisation entre les deux voies sont également supprimés puisque les signaux précédemment destinés à une transmission en bande L1 ou L5 sont à présent codés spectralement et transmis sur une même fréquence. Enfin, l'utilisation d'un code d'étalement C0 spécifique à chaque station NLES émettrice permet d'implémenter une redondance entre stations de type chaude comme cela sera explicité plus loin.

Dans une variante de réalisation de l'invention illustrée à la figure 4b, une modulation de type CCSK (Cyclic Code Shift Keying), est appliquée au préalable sur les signaux de navigation en bande L1 et L5 avant l'étape d'étalement spectral à l'aide des codes de Walsh C1,C5.

La technique de modulation CCSK est bien connue de l'Homme du métier, par exemple de par la publication « Cyclic Code Shift Keying: A Low Probability of Intercept Communication Technique, IEEE Transactions on Aerospace and Electronic Systems, Vol. 39, No 3, July 2003 ». Elle consiste à utiliser un unique code d'étalement Csk de type PN (Pseudo Noise) pour moduler chaque signal de navigation en décalant la séquence du code d'un nombre prédéterminé de symboles pour réaliser la modulation de chaque signal.

Cette variante de réalisation permet de supprimer le signal pilote et de réaliser l'authentification de la station NLES directement en identifiant les codes CCSK appliqués aux signaux de navigation. Un seul code CCSK est utilisé pour l'ensemble des stations NLES émettrices en décalant à chaque fois la séquence du code d'un nombre prédéterminé de symboles avant de réaliser la modulation du signal.

Dans une autre variante de réalisation de l'invention (non représentée), le signal pilote peut être conservé mais surmodulé par un code CCSK afin d'améliorer les performances de détection et donc d'authentification des différentes stations NLES de par les bonnes propriétés de la fonction d'autocorrélation de la modulation CCSK.

Dans une autre variante de l'invention, des polarisations différentes sont employées pour la transmission des signaux en bande L1 et L5. Par exemple, une polarisation droite est utilisée pour un des signaux et une polarisation gauche pour l'autre. De cette façon, la corrélation croisée entre les deux signaux est limitée ce qui permet encore d'améliorer les performances tout en gardant une faible dispersion différentielle entre les signaux.

Dans une autre variante de l'invention, les mêmes polarisations sont employées pour la transmission des signaux en bande L1 et L5 d'une même station NLES mais des polarisations différentes sont utilisées pour deux stations NLES redondantes différentes. Ce scénario englobe également le cas où une station NLES donnée ne transmet que des signaux en bande L1 et une autre station NLES redondante ne transmet que des signaux en bande L5 avec une polarisation différente des signaux en bande L1 transmis par la première station.

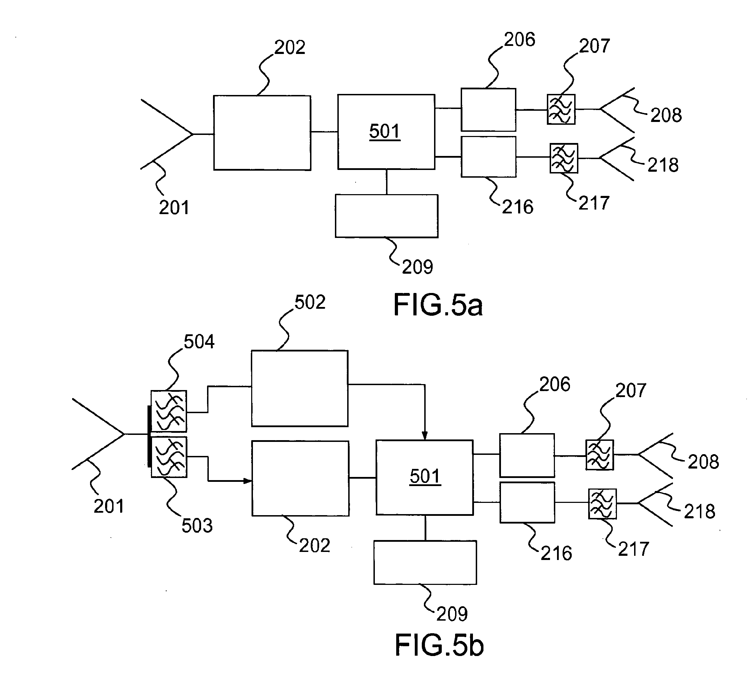

La figure 5a schématise, sur un synoptique, les fonctions principales de la charge utile d'un satellite d'augmentation SBAS selon l'invention. Les éléments communs avec la charge utile selon l'art antérieur décrite à la figure 2 sont numérotés par les mêmes références.

Les dispositifs de transposition de fréquence 204,205,214,215 pour chaque voie sont supprimés et remplacés par un unique processeur de navigation 501 qui reçoit le signal de navigation émis par une ou plusieurs stations NLES et le transmet à une des voies d'amplification et de filtrage pour diffusion aux utilisateurs en fonction de la bande de fréquence L1,L5 identifiée par le code d'étalement C1,C5 associé.

La figure 5b schématise une variante de réalisation de la charge utile selon l'invention. Dans cette variante, une voie de retour spécifique vers la ou les stations NLES au sol est implémentée par le biais d'un amplificateur 502 et d'un filtre passe-bande 504. Un second filtre-passe-bande 503 est nécessaire pour séparer le signal reçu par une station NLES du signal retransmis vers cette même station. Cette voie de retour fonctionne en bande Ku ou C tout comme la voie montante vers le satellite d'augmentation.

Comme mentionné plus haut, certains systèmes d'augmentation, comme le système européen EGNOS, implémentent déjà une voie de retour spécifique pour les satellites d'augmentation, cette voie servant uniquement à l'asservissement temporel du satellite sur une base de temps liée aux stations sols.

Dans la variante de réalisation de l'invention présentement décrite, la voie de retour du satellite d'augmentation permet en outre de transmettre certaines informations vers les stations sol NLES afin d'améliorer encore la continuité de service lors d'une commutation entre deux stations émettrices. En particulier, une mesure du rapport signal à bruit plus interférences SNIR de la liaison montante est réalisée à bord du satellite puis retransmise vers les stations NLES via cette voie de retour. Une synchronisation relative entre station nominale et station redondante est également réalisée.

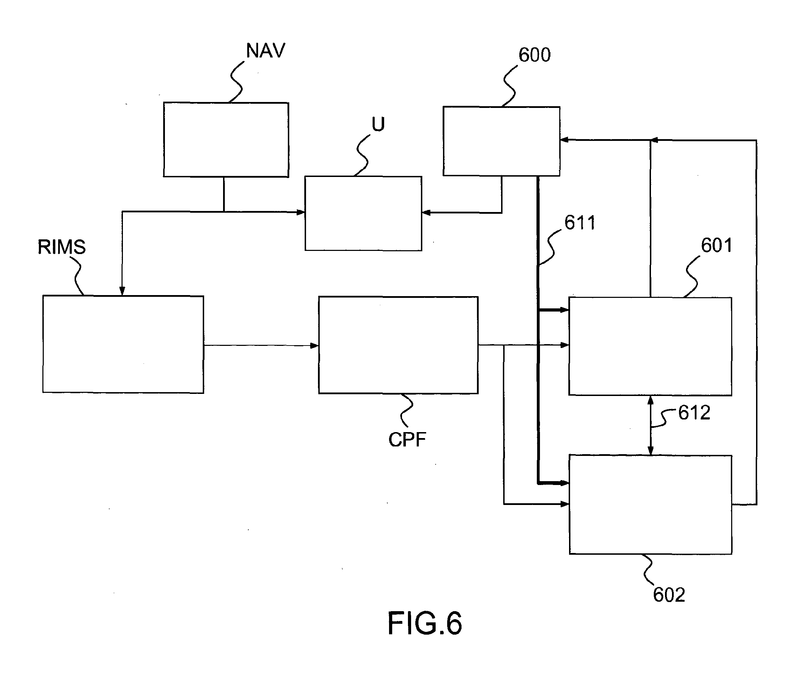

La figure 6 illustre le fonctionnement global d'un système SBAS selon le mode de réalisation de l'invention pour lequel une voie de retour 611 est implémentée entre le satellite d'augmentation 600 et les stations terrestres de navigation 601,602. A partir des informations transmises par le satellite, les stations terrestres 601,602 établissent un lien de synchronisation 612 entre elles. Ce lien 612 permet notamment d'assurer la synchronisation temporelle des stations entre elles.

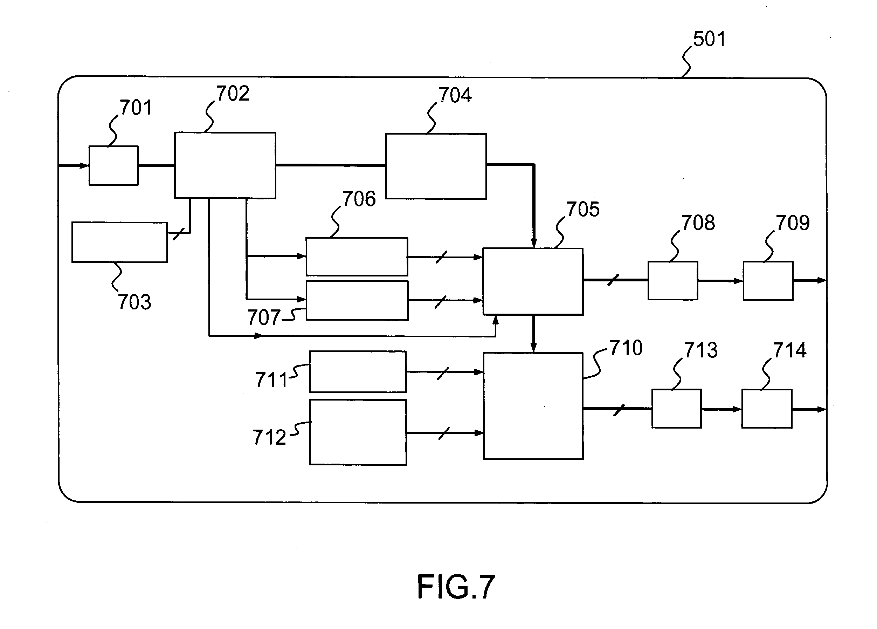

La figure 7 décrit un synoptique fonctionnel du processeur de navigation 501 selon l'invention.

Le signal analogique reçu en entrée du processeur 501 est converti numériquement via un convertisseur analogique numérique 701. Le signal numérique obtenu est fourni en entrée d'un premier module 702 de traitement du signal pilote. Ce module 702 réalise une synchronisation et une démodulation du signal pilote à partir des codes d'étalement référencés pour chaque station NLES dans une mémoire 703. Le signal pilote démodulé est authentifié, suivant la méthode d'authentification de l'état de l'art choisie, via un module d'authentification 706. Le rapport entre le signal et la combinaison du bruit et des interférences, SNIR, est mesuré via un module de mesure 707.

En parallèle, le signal en quadrature, correspondant au signal de navigation émis par différentes stations NLES, est transmis à un démultiplexeur 704 qui associe le signal de navigation reçu à un identifiant d'une station NLES en fonction du code d'étalement de référence C0 de ladite station.Le signal de navigation associé à l'identifiant de la station NLES émettrice est ensuite transmis à un module 705 notamment chargé de l'autorisation de la retransmission du signal vers les utilisateurs. En fonction du résultat d'authentification produit par le module d'authentification 706, le signal est éventuellement bloqué dans le cas où ce résultat est négatif.

Dans le cas où un signal pilote n'est pas utilisé (cas non représenté sur la figure 7), l'authentification de la station NLES émettrice est réalisé directement sur les codes CCSK appliqués aux signaux de navigation. La mesure du rapport signal à bruit plus interférences SNIR de la liaison montante est également réalisé directement sur les signaux de navigation et non sur le signal pilote.

Si l'authentification est positive, les mesures de rapport signal à bruit et interférences SNIR obtenues pour les différentes stations NLES sont comparées et seul le signal émis par la station bénéficiant du meilleur bilan de liaison est retenu pour être retransmis vers le sol. Lorsque le meilleur rapport SNIR est obtenu pour un signal émis par une station en redondance, qui n'est donc pas le signal optimal actuellement retransmis, la charge utile selon l'invention réalise une commutation de stations en sélectionnant le nouveau signal optimal comme celui émis par la station en redondance présentant le rapport SNIR le plus élevé. Ainsi, la commutation est réalisée de façon transparente à bord du satellite, sans engendrer d'interruption de service. La décision de commutation entre deux stations NLES émettrices est effectuée par le processeur de navigation 501 lorsque le rapport SNIR mesuré sur le signal nominal décroît en dessous d'un seuil prédéterminé.

Dans le cas où une voie de retour est disponible (modes de réalisation de l'invention décrits aux figures 5b et 6), les mesures de rapport signal à bruit et interférences SNIR sont retransmises vers les stations NLES au sol via la voie de retour disponible. A cette fin, lesdites mesures sont transmises par un signal modulé, par exemple à l'aide d'une modulation BPSK, et sur une fréquence différente de celle utilisée pour transmettre le signal de navigation. Un plan de fréquence de type FDM est utilisé.

La voie de retour selon l'invention permet donc d'une part la transmission, sur une première bande de fréquence, du signal de navigation à la fois nominal et redondant, à des fins d'asservissement temporel du signal émis par le satellite, et d'autre part la transmission, sur une seconde bande de fréquence, d'un signal de service transportant les informations de rapport SNIR pour chaque station NLES émettrice identifiée. Le module 705 est à cet effet chargé de la génération du signal de service transportant les informations de rapport SNIR estimées par le module 707. La voie de retour est implémentée sous la forme d'au moins un module de suréchantillonnage 708 et un convertisseur numérique analogique 709.

En outre, lorsqu'une commutation est réalisée à bord du satellite, le choix de la station NLES nominale peut également être retransmis via ce signal de service afin d'informer les stations sols qu'une commutation a eu lieu.

Lorsque les stations NLES 601,602 reçoivent le signal de service émis par le satellite d'augmentation 600, elles ajustent leur puissance d'émission afin que chaque station émette un signal asservi en gain, ou amplitude, sur le signal optimal, c'est-à-dire celui émis par la station NLES nominale. Ainsi, tous les signaux émis sur la voie montante du satellite d'augmentation présentent une puissance équivalente, ce qui facilite encore la commutation transparente entre stations, à bord du satellite, lorsque la station nominale tombe en panne.

Pour réaliser cet asservissement de puissance, seule la mesure du rapport SNIR du signal nominal est nécessaire. Dans une variante de réalisation de l'invention, toutes les mesures de rapport SNIR sont transmises par le satellite, pour permettre aux stations NLES en redondance d'estimer la qualité de leur liaison.

Dans une autre variante de réalisation de l'invention, en sus de la mesure du rapport SNIR, la charge utile du satellite réalise une mesure du décalage temporel entre les différents signaux reçus sur la voie montante, en provenance de la station NLES nominale d'une part et des stations NLES redondantes d'autre part. Le signal de la station nominale est identifié grâce au code d'étalement du signal pilote transmis comme expliqué précédemment ou directement à partir de l'identification des codes CCSK des signaux de navigation eux-mêmes selon la variante de l'invention choisie. Une mesure du décalage temporel entre l'instant de réception du signal nominal et l'instant de réception de chacun des signaux émis par les stations NLES en redondance est réalisée. Cette mesure de décalage est transmise également dans le signal de service via la voie de retour du satellite. Cette information est reçue par les stations sol NLES qui peuvent alors réaliser une synchronisation temporelle, via une liaison terrestre 612, de leurs émetteurs respectifs, afin de synchroniser leurs émissions sur la voie montante.

Cette synchronisation améliore encore la continuité de service lors de la commutation de stations effectuée par la charge utile.

L'invention vise à synchroniser en temps et en puissance tous les signaux émis par les différentes stations NLES sur la voie montante dans le but d'implémenter une redondance dite chaude.

En outre, chaque station, sur réception du signal de navigation émis sur la voie de retour, réalise un contrôle d'intégrité en comparant le message d'augmentation reçu avec celui précédemment émis. Si ce contrôle est négatif, la station arrête d'émettre. Le satellite ne recevra plus de signal de navigation émis par cette station et pourra réaliser une commutation vers la station en redondance bénéficiant du meilleur bilan de liaison.

Une fois le signal de navigation optimal authentifié et sélectionné parmi les différents signaux émis par les stations NLES, il est ensuite transmis à un second module de traitement de signal 710 qui réalise la démodulation du signal de navigation en fonction de son code d'étalement associé 711, et/ou de sa composante de polarisation. Précisément, une opération de désétalement du signal, à partir du code d'étalement connu, est réalisée. Chaque code d'étalement correspond à une bande de fréquence, dans la bande L, utilisée pour transmettre les signaux de navigation aux utilisateurs. Une fois la bande de fréquence identifiée, par exemple la bande L1 ou L5, le signal de navigation est retransmis vers les utilisateurs du système via une voie de conversion en fréquence comportant au moins un module de suréchantillonnage 713 et un convertisseur numérique analogique 714. Dans le cas où aucun signal pilote n'est utilisé, l'authentification de la station NLES émettrice est effectué conjointement à la démodulation CCSK.

En outre, le module de traitement de signal 710 permet également d'appliquer aux signaux des corrections, en amplitude, phase et/ou retard, à partir d'une ou plusieurs tables de calibration 712. Ces tables de calibration sont renseignées à partir de mesures effectuées, en températures, sur la charge utile, et permettant d'identifier les déséquilibres en amplitude, retard et phase, différentiels entre chaque voie d'émission en bande L. Ces tables sont générées à partir de mesures réalisées avant la mise en service du satellite. Les corrections sont ensuite mises à jour en fonction de la température des équipements en service, mesurées par ailleurs par un dispositif de mesure de la température. Ces corrections autorisent un équilibrage précis des chemins d'émission différentiels.

Une façon alternative de réaliser la correction différentielle des différentes voies d'émission en bande L consiste à utiliser une ou plusieurs voies de redondance en émission qui permettent indirectement de sauvegarder le signal émis puis de mesurer les dérives entre le signal émis sauvegardé et le signal reçu.

Une utilisation particulière de l'invention consiste à utiliser la station nominale NLES pour la diffusion des signaux opérationnels en bande L1 et L5 et une station NLES redondante pour transmettre des signaux de test utilisés pour la validation du système dans l'objectif de tester certaines de ses fonctionnalités ou effectuer une qualification du système.

Dans ce cas, les différents codes d'étalement C1,C5,C0 utilisés sont spécifiques aux signaux de test.

Les signaux de test utilisés peuvent être transmis par la même station NLES utilisée pour transmettre les signaux de navigation nominaux, avec une même polarisation d'antenne ou avec une polarisation croisée par rapport aux signaux de navigation. Les signaux de test peuvent également être émis par une station NLES spécifiquement dédiée aux tests.

L'invention présente notamment l'avantage de conserver la mission première du satellite d'augmentation, c'est-à-dire relayer les messages d'augmentation vers les utilisateurs, tout en améliorant la continuité du service lors de la commutation entre stations NLES redondantes. Elle permet également d'améliorer l'authentification des signaux émis et de lutter contre d'éventuels leurres et elle améliore également les performances du système lorsque différentes bandes de fréquences L1,L5 sont utilisées pour transmettre les signaux de navigation.

## Revendications

1. Charge utile pour satellite (600) d'augmentation comprenant une voie d'entrée (201,202,503) adaptée à la réception de signaux de navigation émis par au moins une station (NLES) terrestre de navigation dans une première bande de fréquences et une pluralité de voies de sortie (206,207,208,216,217,218) chacune adaptée à la diffusion de signaux de navigation dans une bande de fréquences différente de ladite première bande et des autres bandes de diffusion, **caractérisée en ce qu'**elle comprend en outre un processeur de navigation (501) adapté à mettre en oeuvre les opérations suivantes pour chacun desdits signaux reçus :
• à partir d'un premier ensemble de codes d'étalements (703) associés chacun à une station (NLES) terrestre de navigation et pour chacun desdits codes, désétaler (702) le signal en phase afin d'extraire un signal pilote,
• authentifier (706) ledit signal pilote et en déduire la station (NLES) émettrice dudit signal,
• si l'authentification (706) est négative, bloquer ledit signal de navigation,
• mesurer (707) le rapport signal à bruit et interférences (SNIR) affectant ledit signal pilote,
• retenir, parmi les signaux de navigation reçus celui qui présente le rapport signal à bruit et interférences le plus élevé et pour lequel l'authentification est positive, ledit signal retenu étant appelé signal nominal, la station (NLES) émettrice du signal nominal étant appelée station nominale, les autres stations (NLES) émettrices étant appelées stations redondantes,
• à partir d'un second ensemble de codes d'étalements (711) associés chacun à un type de signal de navigation destiné à être transmis sur une des bandes de fréquences de diffusion et pour chacun desdits codes, désétaler (710) le signal de navigation nominal en quadrature,
• transmettre (713,714) ledit signal de navigation nominal dans la bande de fréquence de diffusion associée au code d'étalement utilisé.

2. Charge utile pour satellite (600) d'augmentation selon la revendication 1 dans laquelle ledit signal pilote est au préalable démodulé selon une modulation de type « Cyclic Code Shift Keying », l'authentification du signal pilote étant réalisé en identifiant le code associé à ladite modulation.

3. Charge utile pour satellite (600) d'augmentation comprenant une voie d'entrée (201,202,503) adaptée à la réception de signaux de navigation émis par au moins une station (NLES) terrestre de navigation dans une première bande de fréquences et une pluralité de voies de sortie (206,207,208,216,217,218) chacune adaptée à la diffusion de signaux de navigation dans une bande de fréquences différente de ladite première bande et des autres bandes de diffusion, **caractérisée en ce qu'**elle comprend en outre un processeur de navigation (501) adapté à mettre en oeuvre les opérations suivantes pour chacun desdits signaux reçus :
• démoduler ledit signal reçu selon une modulation de type « Cyclic Code Shift Keying »,
• authentifier (706) ledit signal reçu en identifiant le code associé à ladite modulation et en déduire la station (NLES) émettrice dudit signal,
• si l'authentification (706) est négative, bloquer ledit signal de navigation,
• mesurer (707) le rapport signal à bruit et interférences (SNIR) affectant ledit signal reçu,
• retenir, parmi les signaux de navigation reçus celui qui présente le rapport signal à bruit et interférences le plus élevé et pour lequel l'authentification est positive, ledit signal retenu étant appelé signal nominal, la station (NLES) émettrice du signal nominal étant appelée station nominale, les autres stations (NLES) émettrices étant appelées stations redondantes,
• à partir d'un ensemble de codes d'étalements (711) associés chacun à un type de signal de navigation destiné à être transmis sur une des bandes de fréquences de diffusion et pour chacun desdits codes, désétaler (710) le signal de navigation nominal en quadrature,
• transmettre (713,714) ledit signal de navigation nominal dans la bande de fréquence de diffusion associée au code d'étalement utilisé.

4. Charge utile pour satellite (600) d'augmentation selon l'une des revendications précédentes **caractérisée en ce que** lorsque le rapport signal à bruit et interférences (SNIR) mesuré sur ledit signal nominal décroît en dessous d'un seuil prédéterminé, le nouveau signal nominal retenu est celui qui présente le rapport signal à bruit et interférences le plus élevé.

5. Charge utile pour satellite (600) d'augmentation selon l'une des revendications précédentes **caractérisée en ce qu'**elle comprend en outre une voie de retour (502,504) adaptée à la diffusion, dans ladite première bande de fréquences, d'au moins un signal de service vers au moins une station terrestre de navigation (NLES), ledit signal de service comprenant au moins la mesure du rapport signal à bruit et interférences (SNIR) d'au moins le signal nominal, ledit signal de service étant adapté à réaliser un asservissement de la puissance d'émission desdites stations (NLES) redondantes sur la puissance d'émission de la station (NLES) nominale.

6. Charge utile pour satellite (600) d'augmentation selon la revendication 5 **caractérisé en ce que** ledit signal de service comprend en outre les mesures du rapport signal à bruit et interférences (SNIR) des signaux de navigation reçus par le satellite (600) et émis par toutes les stations (NLES) émettrices.

7. Charge utile pour satellite (600) d'augmentation selon l'une des revendications 5 ou 6 **caractérisée en ce que** ledit signal de service comprend en outre une mesure des décalages temporels entre la réception, par le satellite (600), du signal nominal d'une part et des signaux émis par les stations terrestres de navigation (NLES) redondantes, ledit signal de service étant adapté à réaliser une synchronisation temporelle desdites stations (NLES) entre elles.

8. Charge utile pour satellite (600) d'augmentation selon l'une des revendications 5,6 ou 7 **caractérisée en ce que** ladite voie de retour (502,504) est en outre adaptée à la diffusion, dans ladite première bande de fréquences, du signal de navigation nominal.

9. Charge utile pour satellite (600) d'augmentation selon l'une des revendications précédentes **caractérisée en ce que** ladite première bande de fréquences est la bande C ou Ku et lesdites bandes de fréquences de diffusion sont au moins les bandes L1 et L5.

10. Charge utile pour satellite (600) d'augmentation selon l'une des revendications précédentes **caractérisée en ce que** lesdits codes d'étalement sont des codes de Walsh.

11. Satellite d'augmentation (600) comprenant une charge utile selon l'une des revendications précédentes, adaptée à recevoir un signal de navigation sur une liaison montante dans une première bande de fréquences et à rediffuser ledit signal sur une liaison descendante dans une pluralité de bandes de fréquences de diffusion.

12. Station terrestre de navigation (NLES) adaptée à recevoir un message d'augmentation et à générer un signal de navigation contenant ledit message, ledit signal de navigation étant étalé spectralement à l'aide d'un premier code d'étalement (C1,C5) associé à sa bande de fréquence de diffusion (L1,L5) et additionné en quadrature d'un signal pilote étalé spectralement à l'aide d'un second code d'étalement (C0) associé à ladite station terrestre de navigation (NLES), ledit signal de navigation étant destiné à être transmis sur la liaison montante d'un satellite d'augmentation (600) selon la revendication 11, dans une première bande de fréquences différente de la bande de fréquence de diffusion (L1 ,L5).

13. Station terrestre de navigation (NLES) selon la revendication12 dans laquelle une modulation de type « Cyclic Code Shift Keying » est appliquée au préalable audit signal de navigation ou audit signal pilote.

14. Station terrestre de navigation (NLES) selon l'une des revendications 12 ou 13 dans laquelle la polarisation du signal de navigation transmis est différente selon la bande de fréquence de diffusion (L1,L5)

15. Système d'augmentation comprenant :
• au moins une station d'observation (RIMS) adaptée à recevoir un signal de radionavigation transmis par au moins un satellite de radionavigation (NAV) et à réaliser des mesures sur ledit signal,
• au moins un centre de traitement (CPF) adapté à recevoir lesdites mesures transmises par au moins une station de mesure (RIMS) et à élaborer, à partir desdites mesures, au moins un message d'augmentation,
• une pluralité de stations terrestres de navigation (NLES) selon l'une des revendications 12 à 14, lesdits premiers codes d'étalement (C1,C5) associés aux dites stations terrestres de navigation (NLES) étant orthogonaux entre eux,
• au moins un satellite (600) d'augmentation selon la revendication 11.

16. Système d'augmentation selon la revendication 15 **caractérisé en ce qu'**il est adapté à mettre en oeuvre une commutation de stations terrestres de navigation (NLES) de type redondance chaude.

17. Système d'augmentation selon l'une des revendications 15 ou 16 dans lequel la polarisation du signal de navigation transmis est différente entre deux stations terrestres de navigation (NLES) redondantes.

18. Système d'augmentation selon l'une des revendications 15 à 17 **caractérisé en ce que**, sur réception d'un signal de service émis par ledit satellite (600) d'augmentation et comprenant au moins la mesure du rapport signal à bruit et interférences (SNIR) d'au moins ledit signal nominal, lesdites stations terrestres de navigation (NLES) réalisent un asservissement de leur puissance d'émission sur la puissance d'émission de la station nominale.

19. Système d'augmentation selon la revendication 15 à 18 **caractérisé en ce que**, sur réception dudit signal de service, lesdites stations terrestres de navigation (NLES) réalisent une synchronisation temporelle de leurs émissions respectives.

## Patentansprüche

1. Nutzlast für Ergänzungssatelliten (600), umfassend einen Eingangskanal (201, 202, 503), der für den Empfang von Navigationssignalen geeignet ist, die von mindestens einer Up-Link-Station (NLES) in einem ersten Frequenzband gesendet werden, und eine Vielzahl von Ausgangskanälen (206, 207, 208, 216, 217, 218), die jeweils für die Verbreitung von Navigationssignalen in einem Frequenzband geeignet sind, das sich vom ersten Band und den anderen Verbreitungbändern unterscheidet, **dadurch gekennzeichnet, dass** sie ferner einen Navigationsprozessor (501) umfasst, der angepasst ist, um für jedes der empfangenen Signale die folgenden Operationen umzusetzen:
• ausgehend von einer ersten Einheit von Spreizungscodes (703), die jeweils einer Up-Link-Station (NLES) zugeordnet sind, und für jeden der Codes, Entspreizen (702) des Phasensignals, um daraus ein Steuersignal zu extrahieren,
• Authentifizieren (706) des Steuersignals und Ableiten daraus der Sendestation (NLES) des Signals,
• wenn die Authentifizierung (706) negativ ist, Blockieren des Navigationssignals,
• Messen (707) des Signal/Rauschen Plus Interferenz-Verhältnisses (SNIR), das das Steuersignal beeinträchtigt,
• Ermitteln, aus den empfangenen Navigationssignalen, des Signals, das das größte Signal/Rauschen Plus Interferenz-Verhältnis darstellt und für das die Authentifizierung positiv ist, wobei das ermittelte Signal als nominales Signal bezeichnet wird, wobei die Sendestation (NLES) des nominalen Signals als nominale Station bezeichnet wird, wobei die anderen Sendestationen (NLES) als redundante Stationen bezeichnet werden,
• ausgehend von einer ersten Einheit von Spreizungscodes (711), die jeweils einem Navigationssignaltyp zugeordnet sind, der zur Übermittlung über eines der Verbreitungsfrequenzbänder bestimmt ist und für jeden der Codes, Entspreizen (710) des nominalen Navigationssignals 90° phasenverschoben,
• Übermitteln (713, 714) des nominalen Navigationssignals im Verbreitungsfrequenzband, das dem verwendeten Spreizungscode zugeordnet ist.

2. Nutzlast für Ergänzungssatelliten (600) nach Anspruch 1, wobei das Steuersignal zuvor gemäß einer Modulation des Typs "Cyclic Code Shift Keying" demoduliert wird, wobei die Authentifizierung des Steuersignals durch Identifizierung des der Modulation zugeordneten Codes durchgeführt wird.

3. Nutzlast für Ergänzungssatelliten (600), umfassend einen Eingangskanal (201, 202, 503), der für den Empfang von Navigationssignalen geeignet ist, die von mindestens einer Up-Link-Station (NLES) in einem ersten Frequenzband gesendet werden, und eine Vielzahl von Ausgangskanälen (206, 207, 208, 216, 217, 218), die jeweils für die Verbreitung von Navigationssignalen in einem Frequenzband geeignet sind, das sich vom ersten Band und den anderen Verbreitungbändern unterscheidet, **dadurch gekennzeichnet, dass** sie ferner einen Navigationsprozessor (501) umfasst, der angepasst ist, um für jedes der empfangenen Signale die folgenden Operationen umzusetzen:
• Demodulieren des empfangenen Signals gemäß einer Modulation vom Typ "Cyclic Code Shift Keying",
• Authentifizieren (706) des empfangenen Signals durch Identifizieren des Codes, der der Modulation zugeordnet ist, und Ableiten daraus der Sendestation (NLES) des Signals,
• wenn die Authentifizierung (706) negativ ist, Blockieren des Navigationssignals,
• Messen (707) des Signal/Rauschen Plus Interferenz-Verhältnisses (SNIR), das das empfangene Signal beeinträchtigt,
• Ermitteln, aus den empfangenen Navigationssignalen, des Signals, das das größte Signal/Rauschen Plus Interferenz-Verhältnis darstellt und für das die Authentifizierung positiv ist, wobei das ermittelte Signal als nominales Signal bezeichnet wird, wobei die Sendestation (NLES) des nominalen Signals als nominale Station bezeichnet wird, wobei die anderen Sendestationen (NLES) als redundante Stationen bezeichnet werden,
• ausgehend von einem Satz Spreizungscodes (711), die jeweils einem Navigationssignaltyp zugeordnet sind, der zur Übermittlung über eines der Verbreitungsfrequenzbänder bestimmt ist und für jeden der Codes, Entspreizen (710) des nominalen Navigationssignals 90° phasenverschoben,
• Übermitteln (713, 714) des nominalen Navigationssignals im Verbreitungsfrequenzband, das dem verwendeten Spreizungscode zugeordnet ist.

4. Nutzlast für Ergänzungssatelliten (600) nach einem der vorangehenden Ansprüche, **dadurch gekennzeichnet, dass**, wenn das auf dem nominalen Signal gemessene Signal/Rauschen Plus Interferenz-Verhältnis (SNIR) unter einen vorbestimmten Grenzwert fällt, das neue ermittelte nominale Signal das Signal ist, das das höchste Signal/Rauschen Plus Interferenz-Verhältnis aufweist.

5. Nutzlast für Ergänzungssatelliten (600) nach einem der vorangehenden Ansprüche, **dadurch gekennzeichnet, dass** sie ferner einen Rückkanal (502, 504) umfasst, der für die Verbreitung im ersten Frequenzband von mindestens einem Semicesignal an mindestens eine Up-Link-Station (NLES) geeignet ist, wobei das Servicesignal mindestens die Messung des Signal/Rauschen Plus Interferenz-Verhältnisses (SNIR) mindestens des nominalen Signals umfasst, wobei das Servicesignal geeignet ist, die Angleichung der Sendeleistung der redundanten Stationen (NLES) an die Sendeleistung der nominalen Station (NLES) durchzuführen.

6. Nutzlast für Ergänzungssatelliten (600) nach Anspruch 5, **dadurch gekennzeichnet, dass** das Servicesignal ferner die Messungen des Signal/Rauschen Plus Interferenz-Verhältnisses (SNIR) der von dem Satelliten (600) empfangenen und von allen Sendestationen (NLES) gesendeten Navigationssignale umfasst.

7. Nutzlast für Ergänzungssatelliten (600) nach einem der Ansprüche 5 oder 6, **dadurch gekennzeichnet, dass** das Servicesignal ferner eine Messung der Zeitverschiebungen zwischen dem Empfang durch den Satelliten (600) des nominalen Signals einerseits und den von den redundanten Up-Link-Stationen (NLES) gesendeten Signalen umfasst, wobei das Servicesignal für die Durchführung einer zeitlichen Synchronisierung der Stationen (NLES) untereinander ausgebildet ist.

8. Nutzlast für Ergänzungssatelliten (600) nach einem der Ansprüche 5, 6 oder 7, **dadurch gekennzeichnet, dass** der Rückkanal (502, 504) ferner für die Verbreitung des nominalen Navigationssignals im ersten Frequenzband ausgebildet ist.

9. Nutzlast für Ergänzungssatelliten (600) nach einem der vorangehenden Ansprüche, **dadurch gekennzeichnet, dass** das erste Frequenzband das Band C oder Ku ist und die Verbreitungsfrequenzbänder mindestens die Bänder L1 und L5 sind.

10. Nutzlast für Ergänzungssatelliten (600) nach einem der vorangehenden Ansprüche, **dadurch gekennzeichnet, dass** die Spreizungscodes Walsh-Codes sind.

11. Ergänzungssatellit (600), der eine Nutzlast nach einem der vorangehenden Ansprüche umfasst, die für den Empfang eines Navigationssignals über eine aufsteigende Verbindung in einem ersten Frequenzband und für die Weiterverbreitung des Signals über eine abfallende Verbindung in einer Vielzahl von Verbreitungsfrequenzbändern ausgebildet ist.

12. Up-Link-Station (NLES), die für den Empfang einer Ergänzungsmeldung und die Generierung eines Navigationssignals, das die Meldung enthält, ausgebildet ist, wobei das Navigationssignal mit Hilfe eines ersten Spreizungscodes (C1, C5), der seinem Verbreitungsfrequenzband (L1, L5) zugeordnet ist, spektral gespreizt und 90° phasenverschoben einem mit Hilfe eines zweiten Spreizungscodes (C0), der der Up-Link-Station (NLES) zugeordnet ist, spektral gespreizten Steuersignal hinzuaddiert wird, wobei das Navigationssignal zur Übermittlung über die aufsteigende Verbindung eines Ergänzungssatelliten (600) nach Anspruch 11 in einem ersten Frequenzband bestimmt ist, das sich vom Verbreitungsfrequenzband (L1, L5) unterscheidet.

13. Up-Link-Station (NLES) nach Anspruch 12, wobei zuvor eine Modulation vom Typ "Cyclic Code Shift Keying" auf das Navigationssignal oder auf das Steuersignal angewendet wird.

14. Up-Link-Station (NLES) nach einem der Ansprüche 12 oder 13, wobei die Polarisierung des übermittelten Navigationssignals je nach Verbreitungsfrequenzband (L1, L5) unterschiedlich ist.

15. Ergänzungssystem, das umfasst:
• mindestens eine Beobachtungsstation (RIMS), die für den Empfang eines Funknavigationssignals, das von mindestens einem Funknavigationssatelliten (NAV) übertragen wird, und für die Durchführung der Messungen auf dem Signal ausgebildet ist,
• mindestens ein Verarbeitungszentrum (CPF), das für den Empfang der von mindestens einer Messstation (RIMS) übertragenen Messungen und, ausgehend von diesen Messungen, die Erarbeitung mindestens einer Ergänzungsmeldung ausgebildet ist,
• eine Vielzahl von Up-Link-Stationen (NLES) nach einem der Ansprüche 12 bis 14, wobei die ersten Spreizungscodes (C1, C5), die den Up-Link-Stationen (NLES) zugeordnet sind, zueinander orthogonal sind,
• mindestens einen Ergänzungssatelliten (600) nach Anspruch 11.

16. Ergänzungssystem nach Anspruch 15, **dadurch gekennzeichnet, dass** es für die Umsetzung einer Umschaltung von Up-Link-Stationen (NLES) vom Typ warme Redundanz geeignet ist.

17. Ergänzungssystem nach einem der Ansprüche 15 oder 16, wobei die Polarisierung des übertragenen Navigationssignals zwischen zwei redundanten Up-Link-Stationen (NLES) unterschiedlich ist.

18. Ergänzungssystem nach einem der Ansprüche 15 bis 17, **dadurch gekennzeichnet, dass**, bei Empfang eines vom Ergänzungssatelliten (600) gesendeten Servicesignals, das mindestens die Messung des Signal/Rauschen Plus Interferenz-Verhältnisses (SNIR) mindestens des nominalen Signals umfasst, die Up-Link-Stationen (NLES) eine Angleichung ihrer Sendeleistung an die Sendeleistung der nominalen Station durchführen.

19. Ergänzungssystem nach Anspruch 15 bis 18, **dadurch gekennzeichnet, dass**, bei Empfang des Semicesignals, die Up-Link-Stationen (NLES) eine zeitliche Synchronisierung ihrer jeweiligen Sendungen durchführen.

## Claims

1. A payload for an augmentation satellite (600) comprising an input channel (201, 202, 503) designed to receive navigation signals transmitted by at least one Navigation Land Earth Station (NLES) in a first frequency band and a plurality of output channels (206, 207, 208, 216, 217, 218) each designed to broadcast navigation signals in a frequency band that is different from said first band and the other broadcasting bands, **characterised in that** it further comprises a navigation processor (501) designed to implement the following operations for each of said received signals:
• unspreading (702), from a first set of spreading codes (703) each associated with a Navigation Land Earth Station (NLES) and for each of said codes, the phase signal so as to extract a pilot signal;
• authenticating (706) said pilot signal and deducing therefrom the station (NLES) transmitting said signal;
• blocking said navigation signal if said authentication (706) is negative;
• measuring (707) the signal-to-noise plus interference ratio (SNIR) affecting said pilot signal;
• retaining, from the received navigation signals, the navigation signal that exhibits the highest signal-to-noise plus interference ratio and for which the authentication is positive, said retained signal being called nominal signal, with the station (NLES) transmitting the nominal signal being called nominal station and the other transmitting stations (NLES) being called redundant stations;
• unspreading (710), from a second set of spreading codes (711) each associated with a type of navigation signal that is designed to be transmitted on one of the broadcasting frequency bands and for each of said codes, the nominal navigation signal by quadrature;
• transmitting (713, 714) said nominal navigation signal in the broadcasting frequency band associated with the spreading code used.

2. The payload for an augmentation satellite (600) according to claim 1, wherein said pilot signal is previously demodulated using a modulation of the "Cyclic Code Shift Keying" type, with the authentication of said pilot signal being carried out by identifying the code associated with said modulation.

3. The payload for an augmentation satellite (600) comprising an input channel (201, 202, 503) designed to receive navigation signals transmitted by at least one Navigation Land Earth Station (NLES) in a first frequency band and a plurality of output channels (206, 207, 208, 216, 217, 218) each designed to broadcast navigation signals in a frequency band that is different from said first band and the other broadcasting bands, **characterised in that** it further comprises a navigation processor (501) designed to implement the following operations for each of said received signals:
• demodulating said received signal using a modulation of the "Cyclic Code Shift Keying" type;
• authenticating (706) said received signal by identifying the code associated with said modulation and deducing therefrom the station (NLES) transmitting said signal;
• blocking said navigation signal if the authentication (706) is negative;
• measuring (707) the signal-to-noise plus interference ratio (SNIR) affecting said received signal;
• retaining, from the received navigation signals, the navigation signal that exhibits the highest signal-to-noise plus interference ratio and for which the authentication is positive, said retained signal being called nominal signal, with the station (NLES) transmitting the nominal signal being called nominal station and the other transmitting stations (NLES) being called redundant stations;
• unspreading (710), from a set of spreading codes (711) each associated with a type of navigation signal that is designed to be transmitted on one of the broadcasting frequency bands and for each of said codes, said nominal navigation signal by quadrature;
• transmitting (713, 714) said nominal navigation signal in the broadcasting frequency band associated with the spreading code used.

4. The payload for an augmentation satellite (600) according to any one of the preceding claims, **characterised in that**, when the signal-to-noise plus interference ratio (SNIR) measured on said nominal signal drops below a predetermined threshold, the new retained nominal signal is that which exhibits the highest signal-to-noise plus interference ratio.

5. The payload for an augmentation satellite (600) according to any one of the preceding claims, **characterised in that** it further comprises a return channel (502, 504) designed to broadcast, in said first frequency band, at least one service signal towards at least one Navigation Land Earth Station (NLES), said service signal at least comprising the measurement of the signal-to-noise plus interference ratio (SNIR) of at least the nominal signal, said service signal being designed to slave the transmission power of said redundant stations (NLES) to the transmission power of said nominal station (NLES).

6. The payload for an augmentation satellite (600) according to claim 5, **characterised in that** said service signal further comprises the measurements of the signal-to-noise plus interference ratio (SNIR) of the navigation signals received by said satellite (600) and transmitted by all of said transmitting stations (NLES).

7. The payload for an augmentation satellite (600) according to claim 5 or 6, **characterised in that** said service signal further comprises a measurement of the time shifts between the reception, by said satellite (600), of said nominal signal, on the one hand, and the signals transmitted by said redundant Navigation Land Earth Stations (NLES), on the other hand, said service signal being designed to implement time synchronisation between said stations (NLES).

8. The payload for an augmentation satellite (600) according to claim 5, 6 or 7, **characterised in that** said return channel (502, 504) is also designed to broadcast said nominal navigation signal in said first frequency band.

9. The payload for an augmentation satellite (600) according to any one of the preceding claims, **characterised in that** said first frequency band is the C or Ku band and said broadcasting frequency bands are at least bands L1 and L5.

10. The payload for an augmentation satellite (600) according to any one of the preceding claims, **characterised in that** said spreading codes are Walsh codes.

11. An augmentation satellite (600) comprising a payload according to any one of the preceding claims, designed to receive a navigation signal on an uplink in a first frequency band and to re-broadcast said signal on a downlink in a plurality of broadcasting frequency bands.

12. A Navigation Land Earth Station (NLES) designed to receive an augmentation message and to generate a navigation signal containing said message, said navigation signal being spectrally spread using a first spreading code (C1, C5) associated with its broadcasting frequency band (L1, L5) and added by quadrature to a pilot signal that is spectrally spread using a second spreading code (C0) associated with said Navigation Land Earth Station (NLES), said navigation signal being designed to be transmitted on the uplink of an augmentation satellite (600) according to claim 11 in a first frequency band that is different from said broadcasting frequency band (L1, L5).

13. The Navigation Land Earth Station (NLES) according to claim 12, wherein a modulation of the "Cyclic Code Shift Keying" type is previously applied to said navigation signal or to said pilot signal.

14. The Navigation Land Earth Station (NLES) according to claim 12 or 13, wherein the polarisation of said transmitted navigation signal is different depending on said broadcasting frequency band (L1, L5).

15. An augmentation system comprising:
• at least one observation station (RIMS) designed to receive a radionavigation signal transmitted by at least one radionavigation satellite (NAV) and to carry out measurements on said signal;
• at least one processing centre (CPF) designed to receive said measurements transmitted by at least one measurement station (RIMS) and to generate at least one augmentation message from said measurements;
• a plurality of Navigation Land Earth Stations (NLES) according to any one of claims 12 to 14, with said first spreading codes (C1, C5) associated with said Navigation Land Earth Stations (NLES) being orthogonal to each other;
• at least one augmentation satellite (600) according to claim 11.

16. The augmentation system according to claim 15, **characterised in that** it is designed to switch Navigation Land Earth Stations (NLES) of the hot redundancy type.

17. The augmentation system according to claim 15 or 16, wherein the polarisation of said transmitted navigation signal is different between two redundant Navigation Land Earth Stations (NLES).

18. The augmentation system according to any one of claims 15 to 17, **characterised in that**, upon receipt of a service signal that is transmitted by said augmentation satellite (600) and that compuses at least the measurement of the signal-to-noise plus interference ratio (SNIR) of at least said nominal signal, said Navigation Land Earth Stations (NLES) slave their transmission power to the transmission power of said nominal station.

19. The augmentation system according to any one of claims 15 to 18, **characterised in that**, upon receipt of said service signal, said Navigation Land Earth Stations (NLES) implement time synchronisation for their respective transmissions.
